(19) Europäisches Patentamt
European Patent Office
Office européen des brevets

(11)  **EP 1 834 501 B1**

(12)  **FASCICULE DE BREVET EUROPEEN**

(45) Date de publication et mention
de la délivrance du brevet:
**11.10.2017  Bulletin 2017/41**

(21) Numéro de dépôt: **05850612.2**

(22) Date de dépôt: **23.12.2005**

(51) Int Cl.:
**H04W 64/00** *(2009.01)*

(86) Numéro de dépôt international:
**PCT/FR2005/003276**

(87) Numéro de publication internationale:
**WO 2006/072698 (13.07.2006 Gazette 2006/28)**

(54) **EXPLOITATION D'UNE TRAME DE RADIOCOMMUNICATION AU SEIN D'UN SYSTEME D'AU MOINS TROIS EQUIPEMENTS EMETTEURS- RECEPTEURS RADIO**

VERARBEITUNG EINES FUNKKOMMUNIKATIONSRAHMENS IN EINEM SYSTEM MIT MINDESTENS DREI FUNKSENDER-/-EMPFÄNGEREINRICHTUNGEN

PROCESSING OF A RADIO-COMMUNICATION FRAME IN A SYSTEM COMPRISING AT LEAST THREE RADIO TRANSMITTER/RECEIVER DEVICES

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **03.01.2005  FR 0500017**

(43) Date de publication de la demande:
**19.09.2007  Bulletin 2007/38**

(73) Titulaire: **Orange**
**75015 Paris (FR)**

(72) Inventeurs:
• **MISCOPEIN, Benoît**
**F-38000 Grenoble (FR)**
• **SCHWOERER, Jean**
**F-38000 GRENOBLE (FR)**
• **MARX, François**
**F-38240 Meylan (FR)**

(74) Mandataire: **Cabinet Plasseraud**
**66, rue de la Chaussée d'Antin**
**75440 Paris Cedex 09 (FR)**

(56) Documents cités:
**EP-A- 1 213 939      DE-A1- 10 305 358**
**US-A1- 2001 053 699   US-A1- 2003 060 166**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne un procédé d'exploitation d'une trame de radiocommunication au sein d'un système comprenant au moins trois équipements émetteurs-récepteurs radio, ainsi qu'un équipement émetteur-récepteur radio adapté pour mettre en oeuvre un tel procédé. Elle peut être appliquée, notamment, à la mesure de distances entre des équipements radio.

L'invention concerne plus précisément une situation selon laquelle une requête est transmise par un premier équipement radio à un second équipement radio, à laquelle le second équipement répond en produisant une trame radio dont le contenu n'est pas spécifique du premier équipement. Une telle situation intervient, par exemple, lors d'une procédure d'identification des équipements d'un réseau «ad hoc». On entend par réseau «ad hoc» un réseau de transmission capable de prendre en compte des modifications de celui-ci d'une façon autonome, c'est-à-dire sans intervention extérieure. Dans ce cas, un équipement transmet un même signal d'identification en réponse à chaque requête produite par l'un quelconque des autres équipements du système.

Une situation analogue intervient lorsqu'un équipement mobile de radiocommunication est relié à un réseau maillé ou à un réseau «ad hoc» qui utilise un algorithme de routage basé sur la position de l'équipement mobile. Des équipements dont les positions respectives sont connues transmettent chacun une requête de mesure de distance à un équipement mobile entrant dans le système, ou qui a été déplacé récemment. Celui-ci répond à chaque requête en émettant une trame de sondage de canal (ou «Channel Measurement Frame») qui permet à l'équipement requérant d'identifier différents chemins de propagation des signaux radio. Une telle trame de sondage de canal possède un contenu connu de l'Homme du métier, qui est indépendant de l'équipement qui a produit la requête.

Dans ces situations, une même trame est donc transmise à multiples reprises. Ces transmissions multiples mobilisent autant de fois des ressources radio dans l'équipement émetteur de la trame. Elles engendrent aussi une consommation énergétique proportionnelle au nombre de transmissions. Lorsque la trame est adressée à de nombreux équipements requérants, la mobilisation de ressources radio et la consommation énergétique qui en résultent peuvent être conséquentes. Elles sont d'autant plus importantes que la trame est longue, comme c'est le cas pour une trame de sondage de canal, notamment. En outre, la consommation énergétique importante qui est générée est particulièrement pénalisante pour un équipement autonome en alimentation d'énergie, tel qu'un équipement mobile, par exemple. Le document EP1213939 montre un autre procédé pour écouter les transmissions d'autres équipements radio. Un but de la présente invention consiste donc à pallier les inconvénients cités dessus, dans une situation selon laquelle une même trame doit être transmise à plusieurs équipements requérants.

Pour cela, l'invention propose un procédé de mise en oeuvre d'opérations exploitant une trame de radiocommunication au sein d'un système comprenant au moins trois équipements émetteurs-récepteurs radio. Le procédé comporte les étapes suivantes :

a- émission d'un premier signal radio de requête vers un premier équipement du système par un autre équipement du système;

b- émission d'au moins un deuxième signal radio de requête par un autre des équipements du système vers ledit premier des équipements ;

c- émission d'une trame par ledit premier des équipements en réponse audit premier signal radio de requête ; puis

d- exploitation de ladite trame au sein dudit autre des équipements du système qui a émis ledit premier signal radio de requête.

Le procédé comporte en outre une exploitation de la trame au sein des autres équipements du système qui ont émis un deuxième signal de requête dans un intervalle de temps prédéterminé.

Autrement dit, N équipements du système peuvent transmettre chacun une requête respective à un même équipement du système, N étant un nombre entier supérieur ou égal à 2. Parmi les N équipements, celui qui transmet sa requête en premier initie le procédé de l'invention, et reçoit la trame en réponse à sa requête. Les N-1 autres équipements pourront exploiter la même trame si leurs requêtes respectives sont détectées par l'équipement émetteur de la trame pendant l'intervalle de temps prédéterminé, dont le décompte peut être provoqué par la requête transmise en premier.

Ainsi, une seule trame étant utile pour effectuer les opérations au sein de plusieurs équipements durant un intervalle de temps prédéterminé, le premier des équipements peut réduire le nombre de trames émises durant cet intervalle de temps. Une telle réduction du nombre de trames émises engendre une réduction des ressources radio mobilisées au sein dudit premier des équipements et une réduction de la consommation d'énergie.

Autrement dit, la trame est transmise «gratuitement» aux N-1 équipements qui ont transmis leur requête après celui qui a initié le procédé. Ce gain est d'autant plus important que la trame transmise est longue et que le système comprend un grand nombre d'équipements susceptibles de produire chacun une requête.

La ressource radio n'a donc été mobilisée qu'une seule fois pour transmettre la trame, et une quantité d'énergie correspondant à une seule transmission de trame a seulement été consommée. La mobilisation des ressources et la consommation d'énergie sont donc réduites au minimum pour un intervalle de temps prédéterminé donné.

Eventuellement, le premier signal de requête et l'un des deuxièmes signaux de requêtes peuvent être transmis par un même équipement du système.

De préférence, ledit premier équipement du système n'émet aucune trame en réponse au deuxième signal de requête émis dans l'intervalle de temps prédéterminé. De la sorte, les gains d'énergie consommée et de ressources mobilisées au sein du premier équipement sont les plus grands possible.

L'intervalle de temps prédéterminé pendant lequel une trame est émise par le premier des équipements en réponse au premier signal radio de requête peut être choisi de manière à obtenir un compromis entre, d'un côté, la consommation énergétique et la mobilisation de ressources radio, et, de l'autre côté, la stationnarité du canal. Plus l'intervalle de temps est long, moins les ressources sont mobilisées et plus la consommation est réduite. Mais, plus l'intervalle de temps est long, plus le canal risque d'être non-stationnaire entre l'instant d'émission du deuxième signal radio de requête et la réception de la trame par un autre des équipements, entraînant des imprécisions dans l'opération mise en oeuvre par l'autre des équipements ayant émis la deuxième requête, notamment lorsque la trame est une trame de sondage de canal.

Selon un mode de mise en oeuvre préféré de l'invention, l'intervalle de temps prédéterminé comporte une première durée supérieure à un temps de garde déterminé entre la réception dudit premier signal de requête par ledit premier des équipements et l'émission de la trame, et/ou une seconde durée au moins égale à un temps d'écoute déterminé après l'émission de la trame.

La trame est préférentiellement émise à un instant qui est déterminé par un contrôleur d'accès multiple. Dans ce cas, le contrôleur d'accès multiple désigne un intervalle de temps radio disponible qui est suffisant pour transmettre la trame sans perturber d'éventuelles communications en cours. Chaque équipement émetteur-récepteur du système peut incorporer un contrôleur d'accès multiple distinct, comme, par exemple, dans un système CSMA/CA (pour « Carrier Sense Multiple Access with Collision Avoidance » en anglais). Alternativement, un contrôle d'accès multiple général peut être utilisé, tel que, par exemple, dans un système TDMA (pour « Time Division Multiple Access »).

L'invention peut notamment être mise en oeuvre pour mesurer des distances de séparation entre des équipements d'un système de radiocommunication. A cette fin, la trame transmise pour être exploitée par plusieurs équipements du système peut être une trame de sondage de canal. En effet, l'exploitation d'une telle trame par chaque équipement récepteur concerne des caractéristiques apparues lors de la propagation des signaux radio correspondant à celle-ci, jusqu'à chaque équipement récepteur. Le contenu de la trame à son émission est indépendant des équipements récepteurs.

L'invention propose donc aussi un procédé de mesure de distances entre un premier des équipements du système et au moins deux autres des équipements du système, qui utilise un procédé de mise en oeuvre d'opérations exploitant une trame de radiocommunication tel que décrit précédemment. Un tel procédé de mesure de distances comporte en outre :

> a- en réponse à chaque signal de requête détecté, une émission d'un signal d'accusé de réception par ledit premier équipement, destiné audit autre des équipements qui a émis ledit signal de requête ; et
> b- une mesure d'un temps d'échange de signaux radio à partir d'un instant d'émission de chaque signal de requête et d'un instant de réception du signal d'accusé de réception transmis en réponse audit signal de requête.

Lorsqu'une durée de garde et/ou une durée d'écoute sont prévues respectivement avant et/ou après l'émission de la trame, le procédé de mesure de distances comporte avantageusement une détermination de la distance respective de séparation entre ledit premier équipement et chacun des autres équipements à partir du temps d'échange et d'une analyse de signaux radio reçus correspondant à ladite trame.

L'invention propose enfin un équipement émetteur-récepteur radio adapté pour mettre en oeuvre les étapes exécutées par le premier et/ou un autre des équipements d'un procédé de mise en oeuvre d'opérations exploitant une trame, ou d'un procédé de mesure de distances, tels que décrits précédemment.

D'autres particularités et avantages de la présente invention apparaîtront dans la description ci-après d'un exemple de mise en oeuvre non limitatif, en référence aux dessins annexés, dans lesquels :

- la figure 1 illustre un système de radiocommunication destiné à mettre en oeuvre un procédé selon l'invention; et

- la figure 2 est un diagramme chronologique des différentes étapes d'un procédé selon l'invention.

L'invention est maintenant décrite en détail dans le cadre d'une mesure de distances entre plusieurs équipements mobiles émetteurs-récepteurs radio. Il est entendu que cette application de l'invention n'est donnée qu'à titre illustratif, et que l'invention peut être mise en oeuvre dans le cadre de nombreuses autres applications.

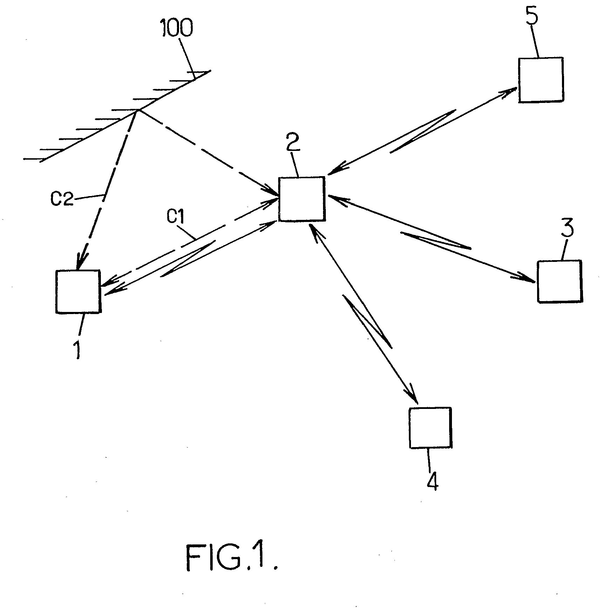

Conformément à la figure 1, un système de communication comprend un ensemble d'équipements émetteurs-récepteurs radio, dont cinq de ceux-ci sont référencés 1 à 5. Chaque émetteur-récepteur peut constituer l'interface radio d'un capteur faisant partie d'un système de gestion domotique, par exemple. Pour un tel système, certains capteurs peuvent être dédiés à des mesures thermiques, d'autres au repérage de l'état d'unités de contrôle d'éléments de chauffage, etc. Il peut s'agir d'un système «ad hoc», qui gère lui-même les séquences de communication entre les différents capteurs. Ce peut être, notamment, un système de type Bluetooth connu de l'Homme du métier.

La mesure de la distance entre les équipements 1 et 2 est d'abord décrite. L'utilisation de l'invention pour mesurer en outre les distances entre les équipements 2 et 3, 2 et 4 puis 2 et 5, sera décrite ensuite.

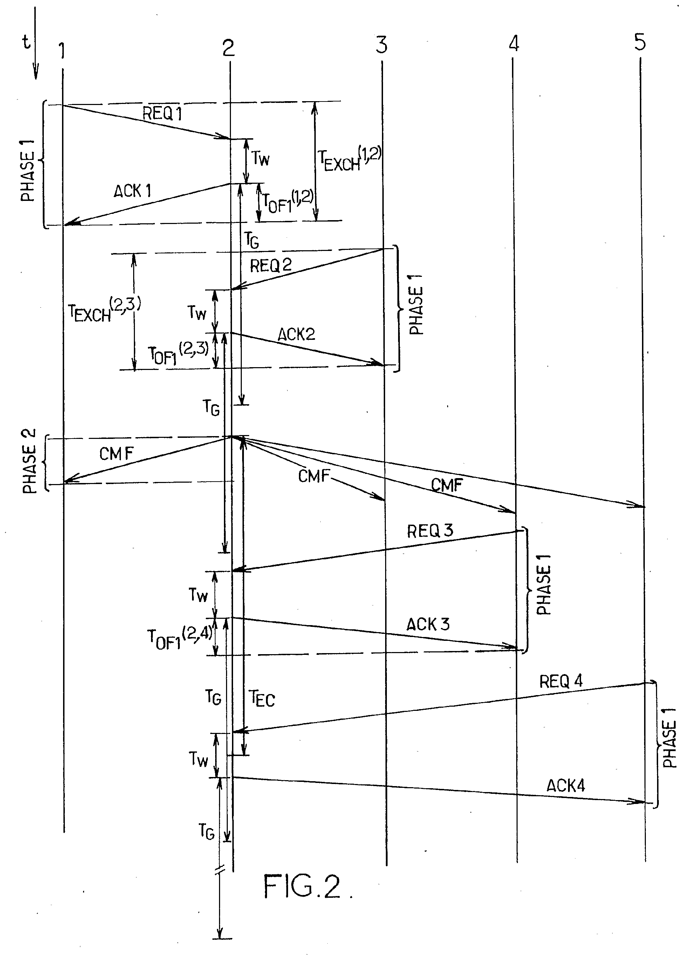

La figure 2 indique, dans sa partie gauche, les actions successives qui sont exécutées au sein des équipements 1 et 2, lorsque l'équipement 1 initie une mesure de la distance qui le sépare de l'équipement 2. L'axe vertical descendant correspond à une coordonnée temporelle, notée t. En premier lieu, l'équipement 1 envoie une requête, notée REQ1, à destination de l'équipements 2. La requête REQ1 initie une mesure d'un délai d'échange de signaux radio transmis entre les équipements 1 et 2. En outre, elle sollicite l'émission d'une trame de sondage de canal par l'équipement 2.

Lorsque l'équipement 2 reçoit la requête REQ1, il peut soit refuser la mesure, soit l'accepter. S'il l'accepte, il répond en adressant un signal d'accusé de réception ACK1 à l'équipement 1. La détection et la réception des signaux radio par chacun des équipements 1 et 2 sont exécutées d'une façon connue et non reprise ici.

L'équipement 2 transmet le signal ACK1 après une durée d'attente déterminée, comptée à partir de la réception de la requête REQ1. Cette durée d'attente est fixée par le constructeur des équipements et mémorisée au sein de chacun d'eux. Elle est notée $T_W$ et appelée délai intermédiaire. Elle permet principalement à un équipement qui reçoit une requête de mesure de distance de passer du mode de réception de signaux radio au mode d'émission. En outre, la trame du signal ACK1 est préparée pendant le délai $T_W$.

Le signal ACK1 est transmis sans faire appel au gestionnaire d'accès multiple de l'équipement 2. Autrement dit, à la fin du délai intermédiaire $T_W$, l'équipement 2 interrompt toute émission ou réception de signaux radio éventuellement en cours pour émettre le signal ACK1. Une telle interruption d'émission ou de réception peut concerner une communication entre l'équipement 2 et un autre équipement quelconque du système. De cette façon, la durée entre la réception de la requête REQ1 et l'émission du signal ACK1 par l'équipement 2 est connue avec précision par l'équipement 1 : elle est égale au délai $T_W$.

Lorsque l'équipement 1 reçoit le signal ACK1, il détermine la durée écoulée depuis l'émission de la requête REQ1. Cette durée est appelée durée d'échange de signaux radio entre les équipements 1 et 2, et notée $T_{EXCH}(1, 2)$. Elle est mémorisée au sein de l'équipement 1.

L'équipement 1 calcule alors un temps de vol $T_{OF1}(1,2)$ ($T_{OF}$ pour «Time Of Flight » en anglais) des signaux REQ1 et ACK1 échangés entre les équipements 1 et 2, selon la formule (1) suivante :

$$T_{OF1}(1, 2) = 0{,}5 \times [T_{EXCH}(1, 2) - T_W] \qquad (1)$$

Une longueur des chemins parcourus par les signaux REQ1 et ACK1 peut en outre être calculée, en divisant $T_{OF1}(1, 2)$ par la vitesse de propagation des signaux radio entre les équipements du système. Cette vitesse est égale à $3.10^8$ m.s$^{-1}$.

L'échange des signaux REQ1 et ACK1 ainsi que le calcul de $T_{OF1}(1, 2)$ constituent une première phase du procédé de mesure de la distance entre les équipements 1 et 2. Cette première phase est notée phase 1 sur la figure 2.

Le chemin de propagation suivi par les signaux REQ1 et ACK1 peut soit relier les équipements 1 et 2 en ligne droite (chemin C1 indiqué sur la figure 1), soit les relier avec au moins une réflexion intermédiaire. Le chemin C2 indiqué sur la figure 1 présente une réflexion sur une paroi 100, par exemple en métal. Du fait de cette réflexion, le chemin C2 est plus long que le chemin C1. Le temps de vol $T_{OF1}(1, 2)$ correspond en général à celui des chemins de propagation C1 et C2 qui est suivi par une partie principale de l'énergie des signaux radio REQ1 et ACK1.

Une seconde phase du procédé de mesure de la distance entre les équipements 1 et 2 est alors exécutée (phase 2 sur la figure 2). L'équipement 2 émet une trame de sondage de canal, notée CMF pour «Channel Measurement Frame» en anglais. Cette émission de la trame CMF est exécutée en respectant l'accès multiple à la ressource d'émission radio de l'équipement 2. Pour cela, la trame 2 est transmise lorsque le gestionnaire d'accès multiple, qui peut être incorporé à l'équipement 2, identifie la possibilité de disposer d'un temps de transmission suffisant.

L'équipement 1 analyse alors l'ensemble des signaux radio qu'il reçoit et qui correspondent à la trame CMF. La structure d'une trame de sondage de canal, ainsi que le mode d'analyse de celle-ci sont supposés connus, et ne sont pas repris en détail ici. L'équipement 1 identifie tout d'abord une première partie de signal radio reçu comme correspondant à une portion de la trame CMF qui a suivi le même chemin de propagation que le signal d'accusé de réception ACK1 de la phase 1. Cette identification peut résulter d'une comparaison entre le niveau d'énergie de la première partie de signal reçu correspondant à la portion de trame CMF et celui du signal ACK1 reçu. L'équipement 1 recherche ensuite si une seconde partie de signal radio reçu ne correspond pas aussi à une portion de la trame CMF, qui a suivi un chemin de propagation plus court que celui de la première partie de signal radio. Cette recherche est exécutée en combinant une sélection de parties du signal radio reçu par l'équipement 1, effectuée au moyen d'un seuil d'énergie de réception variable, et une reconnaissance de portions de trame CMF. L'équipement 1 en déduit une différence de temps de vol entre le chemin de propagation suivi par le signal ACK1 et un chemin plus court entre les épuisements 1 et 2, dont l'existence est détecté d'après le signal radio reçu correspondant à la trame CMF. Cette différence est notée $\Delta T_{OF}(1, 2)$.

Lorsque plusieurs chemins sont détectés, qui sont plus courts que celui détecté lors de la réception du signal ACK1, l'équipement 1 sélectionne celui d'entre eux qui est le plus court, c'est-à-dire qui est associé à la valeur de $\Delta T_{OF}(1, 2)$ la plus grande.

L'équipement 1 calcule ensuite le temps de vol des signaux transmis entre les deux équipements 1 et 2 selon le chemin de propagation le plus court par la formule (2) ci-dessous. Ce temps du vol selon le chemin le plus court est noté $T_{OF2}(1, 2)$.

$$T_{OF2}(1, 2) = T_{OF1}(1, 2) - \Delta T_{OF}(1, 2) \qquad (2)$$

$T_{OF2}(1, 2)$ est une mesure de la longueur du chemin de propagation le plus court entre les équipements 1 et 2. Cette longueur peut être exprimée en mètres, en divisant $T_{OF2}(1, 2)$ par la vitesse de propagation des signaux radio entre les équipements du système. Elle correspond le plus souvent, de même que $T_{OF2}(1, 2)$, à une propagation en ligne droite des signaux radio entre les équipements 1 et 2 (chemin C1 sur la figure 1).

Il est possible que le chemin de propagation détecté lors de la réception du signal ACK1 de la phase 1 soit celui qui est le plus court. Dans ce cas, l'analyse des signaux radio reçus par l'équipement 1 qui correspondent à la trame de sondage de canal CMF ne révèle aucun chemin encore plus court. La phase 2 aboutit alors à une valeur nulle de $\Delta T_{OF}(1, 2)$.

La trame de sondage de canal CMF est émise par l'équipement 2 après le signal d'accusé de réception ACK1, avec une durée d'attente à partir de l'émission du signal ACK1 qui est supérieure ou égale à un temps de garde déterminé. Ce temps de garde est noté $T_G$ sur la figure 2. L'ordre de grandeur du temps de garde choisi de sorte que le canal de transmission radio entre le premier équipement et l'équipement émetteur du premier signal de requête peut rester stationnaire pendant cette durée. Une telle stationnarité de canal procure des conditions favorables d'exploitation de la trame au sein du premier équipement, en particulier lorsque la trame est une trame de sondage de canal. La durée entre l'émission du signal ACK1 et celle de la trame CMF par l'équipement 2 est égale à la somme du temps de garde $T_G$ et d'un délai dû au respect de l'accès multiple pour l'équipement 2. La valeur de $T_G$ est enregistrée au sein de chaque équipement du système lors de la fabrication ou lors d'une initialisation de celui-ci. Elle ne doit pas être trop élevée, afin que le canal utilisé pour communiquer entre les équipements 1 et 2 puisse être considéré comme stationnaire entre les phases 1 et 2 du procédé. Le canal est dit stationnaire lorsque les équipements 1 et 2 restent sensiblement immobiles et lorsque le milieu de transmission dans lequel se propagent les signaux radio présente des caractéristiques sensiblement constantes pendant la durée de la mesure de distance. A titre d'exemple, $T_G$ peut être de l'ordre de 10 millisecondes.

Indépendamment de la mesure en cours de la distance entre les équipements 1 et 2, l'équipement 3 peut requérir une mesure de la distance qui le sépare de l'équipement 2. Pour cela, il adresse à l'équipement 2 un signal de requête REQ2 (voir figure 2), similaire au signal REQ1. On suppose que le signal REQ2 est reçu par l'équipement 1 après le signal REQ1, et avant l'expiration du temps de garde $T_G$ compté à partir de la transmission du signal ACK1 par l'équipement 2.

Le signal REQ2 est transmis par l'équipement 3 à un instant déterminé par un contrôleur d'accès multiple. Néanmoins, une collision entre les signaux ACK1 et REQ2 au niveau de l'équipement 2 est possible, puisque le signal ACK1 est transmis impérativement à l'expiration du délai intermédiaire $T_W$ compté à partir de la réception du signal REQ1. Mais une telle collision est d'autant moins probable que les signaux ACK1 et REQ2 sont courts. Avantageusement, ils peuvent chacun être constitués d'une trame de communication dépourvue de données utiles («payload» en anglais), de sorte qu'ils sont traités au sein de l'équipement 2 au plus proche de la couche physique. Les traitements respectifs des signaux ACK1 et REQ2 par l'équipement 2 peuvent alors être rapides, ce qui réduit le risque de collision.

La phase 1 de la mesure de distance entre les équipements 2 et 3 est exécutée de la façon qui a été décrite précédemment pour les équipements 1 et 2. L'équipement 2 renvoie un signal d'accusé de réception ACK2 à l'équipement 3, à l'expiration d'un nouveau délai intermédiaire $T_W$ compté à partir de la réception du signal REQ2. Si le signal REQ2 a été reçu par l'équipement 2 juste avant l'expiration du temps de garde $T_G$ compté à partir de la transmission du signal ACK1, la transmission de la trame CMF peut être retardée par le contrôleur d'accès multiple de l'équipement 2, de sorte que la trame CMF est transmise après le signal ACK2.

Une durée d'échange des signaux radio transmis entre les équipements 2 et 3, notée $T_{EXCH}(2, 3)$, est chronométrée par l'équipement 3. Elle est déterminée par les instants respectifs d'émission du signal REQ2 et de réception du signal ACK2. L'équipement 3 calcule alors un temps de vol $T_{OF1}(2, 3)$ des signaux REQ2 et ACK2 selon la formule (3) suivante, qui correspond à la formule 1 appliquée aux équipements 2 et 3 :

$$T_{OF1}(2, 3) = 0,5 \times [T_{EXCH}(2, 3) - T_W] \qquad (3)$$

De même que l'équipement 1, l'équipement 3 reçoit aussi la trame CMF émise par l'équipement 2. L'équipement 3 détermine une différence de temps de vol entre des signaux radio transmis entre les équipements 2 et 3 : $\Delta T_{OF}(2, 3)$ est la différence entre le temps de vol des signaux REQ2 et ACK2 d'une part, et le temps de vol correspondant au plus court chemin de propagation entre les équipements 2 et 3. Le temps de vol des signaux radio entre les équipements 2 et 3, selon le chemin de propagation le plus court, est alors calculé par la formule (4) suivante :

$$T_{OF2}(2, 3) = T_{OF1}(2, 3) - \Delta T_{OF}(2, 3) \qquad (4)$$

La distance entre les équipements 2 et 3 a donc été mesurée en utilisant la trame CMF transmise pour la mesure de la distance entre les équipements 1 et 2.

Cette trame CMF transmise par l'équipement 2 peut encore être détectée par un autre équipement du système, par exemple l'équipement 4, avant l'expiration d'un temps d'écoute déterminé, noté $T_{EC}$ sur la figure 2. $T_{EC}$ peut être, par exemple, un délai d'attente avant que l'équipement 2 devienne indisponible pour détecter un nouveau signal de requête. Il est compté au sein de l'équipement 2, à partir de l'instant d'émission de la trame CMF. Par exemple, à l'issue du temps d'écoute $T_{EC}$, l'équipement 2 effectue une autre tâche ou passe en mode d'économie d'énergie. Si la distance entre les équipements 2 et 4 doit aussi être mesurée, l'équipement 4 analyse de même les signaux radio qu'il détecte et qui correspondent à la trame CMF. Il en déduit une valeur $\Delta T_{OF}(2, 4)$ qu'il mémorise.

Le temps d'écoute $T_{EC}$ peut être fixé de la même façon que le temps de garde $T_G$, tout en ayant une valeur différente de celui-ci. De préférence, $T_{EC}$ est supérieur à $T_G$, car il est nécessaire que l'équipement 4 ait fini de détecter et d'analyser les signaux radio reçus qui correspondent à la trame CMF avant d'émettre lui-même un nouveau signal radio. $T_{EC}$ peut être égal à 50 millisecondes, par exemple.

L'équipement 4 exécute ensuite la phase 1 du procédé de mesure de distance, afin de chronométrer un temps d'échange $T_{EXCH}(2, 4)$. De la même façon que précédemment, des signaux REQ3 et ACK3 sont transmis entre les équipements 2 et 4. L'équipement 4 en déduit un premier temps de vol $T_{OF1}(2, 4)$. Le temps de vol des signaux radio entre les équipements 2 et 4 selon le chemin de propagation le plus court, $T_{OF2}(2, 4)$, est alors obtenu en retranchant $\Delta T_{OF}(2, 4)$ à $T_{OF1}(2, 4)$.

La distance entre les équipements 2 et 4 est donc aussi obtenue en utilisant la trame CMF transmise pour la mesure de la distance entre les équipements 1 et 2. Pour cela, le signal REQ3 a été reçu par l'équipement 2 après que la trame CMF a été émise, mais avant expiration du temps d'écoute.

L'équipement 2 peut éventuellement recevoir un signal de requête de mesure de distance juste avant l'expiration du temps d'écoute $T_{EC}$. Tel est le cas du signal REQ4 (figure 2) transmis par l'équipement 5. On suppose qu'à cet instant, l'équipement 5 a reçu et analysé la trame CMF, de la même façon que l'équipement 4. L'activité de l'équipement 2 est alors consacrée en priorité à la transmission d'un signal d'accusé de réception ACK4 en réponse au signal REQ4, en respectant le délai intermédiaire $T_W$. Le signal ACK4 peut alors être transmis après l'expiration du délai $T_{EC}$. L'équipement 5 détermine alors la distance qui le sépare de l'équipement 2, de la même façon que l'équipement 4.

Il ressort de la description détaillée ci-dessus que la trame CMF transmise en réponse au premier signal radio de requête sert à mesurer les distances entre l'équipement 2 et chacun des équipements 1, 3, 4 et 5. Autrement dit, la transmission de la trame CMF est partagée entre les mesures de distances initiées respectivement par les équipements 1, 3, 4 et 5. Il est ainsi possible de réduire le nombre de trames CMF transmises par l'équipement 2 durant l'intervalle de temps prédéterminé à un nombre de trames CMF inférieur au nombre d'équipements requérant ce type de trame. Notamment, il est possible de réduire le nombre de trames CMF émises par l'équipement durant l'intervalle de temps prédéterminé à 3 ou 2, voire à 1 seule trame(s) répartie(s) sur cet intervalle de temps. Des gains d'énergie et de temps de transmission radio au sein de l'équipement 2 en résultent, d'autant plus importants qu'une trame de sondage de canal est particulièrement longue, notamment par rapport à une trame de communication qui transporte des données utiles.

Lorsque l'intervalle de temps prédéterminé est long, l'émission de plusieurs trames par l'équipement 2 peut permettre de réduire les imprécisions liées à la non-stationnarité du canal. Par exemple, en réponse à la première requête REQ1 de l'équipement 1, l'équipement 2 transmet une trame CMF qui sera exploitée par un autre équipement 3-5 ayant émis une requête REQ3-REQ5 à un instant suffisamment éloigné de l'instant d'émission de la trame CMF pour que le canal soit non-stationnaire entre ces deux instants. La mesure de distance effectuée par cet autre équipement 3-5 pourra donc être améliorée en termes de précision en exploitant une nouvelle trame CMF émise par l'équipement 2 à un instant plus proche de la requête REQ3-REQ5 dans l'intervalle de temps prédéterminé.

Par ailleurs, la phase 1 du procédé de mesure de distance peut être répétée à l'initiative de l'équipement 1. A chaque nouvelle exécution de la phase 1 requise par l'équipement 1, une nouvelle valeur du temps de vol $T_{OF1}(1, 2)$ est obtenue. La comparaison entre plusieurs valeurs de temps de vol obtenues successivement permet de vérifier que le canal de transmission entre les équipements 1 et 2 est stationnaire. Il est aussi possible de déterminer $T_{OF1}(1, 2)$ avec une précision supérieure, par exemple en calculant $T_{OF1}(1, 2)$ à partir d'une moyenne de plusieurs délais d'échange $T_{EXCH}(1, 2)$ mémorisés lors d'exécutions répétées de la phase 1.

Dans ce cas, l'équipement 1 peut répéter l'envoi d'un signal de requête soit avant l'expiration du temps de garde $T_G$, compté à partir du premier signal de requête transmis par l'équipement 1, soit avant l'expiration du temps d'écoute $T_{EC}$, compté à partir de la transmission de la trame CMF par l'équipement 2. La phase 1 de la mesure de distance entre les équipements 1 et 2 est alors répétée, sans que la transmission de la trame CMF soit retardée. La durée totale pendant laquelle l'équipement 2 est mobilisé n'est donc pas augmentée.

De même, l'équipement 3 peut requérir des exécutions supplémentaires de la phase 1 de la mesure de la distance qui le sépare de l'équipement 2. De telles exécutions supplémentaires doivent être initiées par des signaux de requêtes transmis par l'équipement 3 dans les mêmes délais que ceux indiqués ci-dessus pour l'équipement 1.

Enfin, l'équipement 4 peut aussi requérir plusieurs exécutions de la phase 1 de la mesure de distance. Celles-ci doivent alors être initiées pendant la durée d'écoute fixée par l'exécution du procédé de mesure de distance qui a été déclenchée par l'équipement 1.

## Revendications

**1.** Procédé de mise en oeuvre d'opérations exploitant une trame de radiocommunication (CMF) au sein d'un système comprenant au moins trois équipements (1-5) émetteurs-récepteurs radio, ledit procédé comportant les étapes suivantes :

a- émission d'un premier signal radio de requête (REQ1) vers un premier équipement du système (2) par un autre équipement du système (1) ;

b- émission d'au moins un deuxième signal radio de requête (REQ2-REQ4) par un autre des équipements du système (1, 3-5) vers ledit premier des équipements (2) ;

c- émission d'une trame (CMF) par ledit premier des équipements (2) en réponse audit premier signal radio de requête (REQ1) ; puis

d- exploitation de ladite trame (CMF) au sein dudit autre des équipements du système (1) qui a émis ledit premier signal radio de requête (REQ1),

**caractérisé en ce qu'**il comporte en outre une exploitation de ladite trame (CMF) au sein desdits autres équipements du système (1, 3-5) qui ont émis un deuxième signal de requête (REQ2-REQ4) dans un intervalle de temps prédéterminé.

**2.** Procédé selon la revendication 1, **caractérisé en ce qu'**il comporte, en réponse audit deuxième signal de requête (REQ2-REQ4) émis dans l'intervalle de temps prédéterminé, aucune émission de trame (CMF) par ledit premier des équipements (2).

**3.** Procédé selon la revendication 1 ou 2, **caractérisé en ce que** l'intervalle de temps prédéterminé comporte une première durée supérieure à un temps de garde déterminé ($T_G$) entre la réception dudit premier signal de requête (REQ1) par ledit premier des équipements (2) et l'émission de la trame (CMF), et/ou une seconde durée au moins égale à un temps d'écoute déterminé ($T_{EC}$) après l'émission de la trame (CMF).

**4.** Procédé selon l'une quelconque des revendications précédentes, suivant lequel la trame (CMF) est émise à un instant déterminé par un contrôleur d'accès multiple.

**5.** Procédé selon l'une quelconque des revendications précédentes, suivant lequel la trame (CMF) est une trame de sondage de canal.

**6.** Procédé selon l'une quelconque des revendications précédentes, suivant lequel lesdits premier (REQ1) et deuxième (REQ2-REQ4) signaux de requêtes sont transmis par un même équipement du système.

7. Procédé de mesure de distances entre un premier des équipements d'un système et au moins deux autres des équipements du système, utilisant un procédé de mise en oeuvre d'opérations exploitant une trame de radiocommunication selon l'une quelconque des revendications précédentes, **caractérisé en ce qu'**il comporte :

a- en réponse à chaque signal de requête détecté (REQ1-REQ4), une émission d'un signal d'accusé de réception (ACK1-ACK4) par ledit premier équipement (2), destiné audit autre des équipements (1, 3-5) qui a émis ledit signal de requête ; et

b- une mesure d'un temps d'échange de signaux radio ($T_{EXCH}$) à partir d'un instant d'émission de chaque signal de requête (REQ1-REQ4) et d'un instant de réception du signal d'accusé de réception transmis en réponse audit signal de requête (ACK1-ACK4).

8. Procédé selon la revendication 7 ensemble la revendication 3, **caractérisé en ce qu'**il comporte une détermination de distance respective de séparation entre ledit premier équipement (2) et chacun des autres équipements (1, 3-5) à partir du temps d'échange ($T_{EXCH}$) et d'une analyse de signaux radio reçus correspondant à ladite trame (CMF).

9. Equipement émetteur-récepteur radio (2) adapté pour, en réponse à un premier signal de requête reçu et en cas de réception d'au moins un deuxième signal de requête dans un intervalle de temps déterminé, les deux signaux de requête ayant été émis par deux autres équipements respectifs, émettre une seule trame destinée à être exploitée par les deux autres équipements.

10. Equipement émetteur-récepteur radio (3) adapté pour, durant un intervalle de temps déterminé suite à la réception d'un premier signal de requête (REQ1) par un autre équipement, transmettre un deuxième signal de requête et exploiter une trame émise par ledit autre équipement en réponse au dit premier signal de requête.

11. Equipement émetteur-récepteur radio (4) selon la revendication 10, adapté pour transmettre vers ledit autre équipement (2) le deuxième signal de requête durant un intervalle de temps déterminé entre la réception du premier signal de requête (REQ1) et l'émission de ladite trame (CMF) par ledit autre équipement.

12. Equipement émetteur-récepteur radio (4) selon la revendication 10, adapté pour, sur détection de ladite trame émise et avant expiration d'un temps d'écoute déterminé dudit autre équipement, exploiter ladite trame puis émettre le deuxième signal de requête vers ledit autre équipement.

13. Système comportant au moins trois équipements émetteurs-récepteurs radio, un premier desdits équipements étant conforme à l'équipement selon la revendication 9 et au moins un deuxième desdits équipements étant conforme à l'une des revendications 10 à 12.


**Patentansprüche**

1. Verfahren zur Ausführung von Operationen, die einen Funkkommunikationsrahmen (CMF) im Inneren eines Systems mit mindestens drei Funk-Sender/Empfänger-Geräten (1-5) nutzen, wobei das Verfahren die folgenden Schritte umfasst:

a - Senden eines ersten Abfragefunksignals (REQ1) zu einem ersten Gerät des Systems (2) durch ein anderes Gerät des Systems (1);
b - Senden mindestens eines zweiten Abfragefunksignals (REQ2-REQ4) durch ein anderes der Geräte des Systems (1, 3-5) zum ersten der Geräte (2);
c - Senden eines Rahmens (CMF) durch das erste der Geräte (2) in Reaktion auf das erste Abfragefunksignal (REQ1); dann
d - Nutzen des Rahmens (CMF) im Inneren des anderen der Geräte des Systems (1), das das erste Abfragefunksignal (REQ1) gesendet hat,

**dadurch gekennzeichnet, dass** es außerdem eine Nutzung des Rahmens (CMF) im Inneren der anderen Geräte des Systems (1, 3-5) umfasst, die ein zweites Abfragesignal (REQ2-REQ4) in einem vorbestimmten Zeitintervall gesendet haben.

2. Verfahren nach Anspruch 1, **dadurch gekennzeichnet, dass** es in Reaktion auf das zweite Abfragesignal (REQ2-REQ4), das im vorbestimmten Zeitintervall gesendet wird, kein Senden eines Rahmens (CMF) durch das erste der Geräte (2) umfasst.

3. Verfahren nach Anspruch 1 oder 2, **dadurch gekennzeichnet, dass** das vorbestimmte Zeitintervall eine erste Dauer, die größer ist als eine bestimmte Schutzzeit ($T_G$), zwischen dem Empfang des ersten Abfragesignals (REQ1) durch das erste der Geräte (2) und der Sendung des Rahmens (CMF) und/oder eine zweite Dauer mindestens gleich einer bestimmten Abhörzeit ($T_{EC}$) nach dem Senden des Rahmens (CMF) umfasst.

4. Verfahren nach einem der vorangehenden Ansprüche, gemäß dem der Rahmen (CMF) zu einem durch eine Mehrfachzugriffssteuereinheit bestimmten Zeitpunkt gesendet wird.

5. Verfahren nach einem der vorangehenden Ansprüche, gemäß dem der Rahmen (CMF) ein Kanaluntersuchungsrahmen ist.

6. Verfahren nach einem der vorangehenden Ansprüche, gemäß dem das erste (REQ1) und das zweite (REQ2-REQ4) Abfragesignal durch ein gleiches Gerät des Systems übertragen werden.

7. Verfahren zum Messen von Abständen zwischen einem ersten der Geräte eines Systems und mindestens zwei anderen der Geräte des Systems unter Verwendung eines Verfahrens zur Ausführung von Operationen, die einen Funkkommunikationsrahmen nutzen, nach einem der vorangehenden Ansprüche, **dadurch gekennzeichnet, dass** es umfasst:

a - in Reaktion auf jedes detektierte Abfragesignal (REQ1-REQ4) eine Sendung eines Empfangsbestätigungssignals (ACK1-ACK4) durch das erste Gerät (2), das für das andere der Geräte (1, 3-5) bestimmt ist, das das Abfragesignal gesendet hat; und

b - eine Messung einer Funksignalaustauschzeit ($T_{EXCH}$) anhand eines Sendezeitpunkts jedes Abfragesignals (REQ1-REQ4) und eines Empfangszeitpunkts des Empfangsbestätigungssignals, das in Reaktion auf das Abfragesignal (ACK1-ACK4) übertragen wird.

8. Verfahren nach Anspruch 7 zusammen mit Anspruch 3, **dadurch gekennzeichnet, dass** es eine jeweilige Abstandsbestimmung der Trennung zwischen dem ersten Gerät (2) und jedem der anderen Geräte (1, 3-5) anhand der Austauschzeit ($T_{EXCH}$) und einer Analyse von empfangenen Funksignalen, die dem Rahmen (CMF) entsprechen, umfasst.

9. Funk-Sender/Empfänger-Gerät (2), das dazu ausgelegt ist, in Reaktion auf ein erstes empfangenes Abfragesignal und im Fall des Empfangs von mindestens einem zweiten Abfragesignal in einem bestimmten Zeitintervall, wobei die zwei Abfragesignale durch zwei jeweilige andere Geräte gesendet wurden, einen einzigen Rahmen zu senden, der durch die zwei anderen Geräte genutzt werden soll.

10. Funk-Sender/Empfänger-Gerät (3), das dazu ausgelegt ist, während eines bestimmten Zeitintervalls nach dem Empfang des ersten Abfragesignals (REQ1) durch ein anderes Gerät ein zweites Abfragesignal zu übertragen und einen Rahmen zu nutzen, der durch das andere Gerät in Reaktion auf das erste Abfragesignal gesendet wird.

11. Funk-Sender/Empfänger-Gerät (4) nach Anspruch 10, das zum Übertragen des zweiten Abfragesignals zum anderen Gerät (2) während eines bestimmten Zeitintervalls zwischen dem Empfang des ersten Abfragesignals (REQ1) und dem Senden des Rahmens (CMF) durch das andere Gerät ausgelegt ist.

12. Funk-Sender/Empfänger-Gerät (4) nach Anspruch 10, das bei der Detektion des gesendeten Rahmens und vor dem Ablauf einer bestimmten Abhörzeit des anderen Geräts dazu ausgelegt ist, den Rahmen zu nutzen, dann das zweite Abfragesignal zum anderen Gerät zu senden.

13. System mit mindestens drei Funk-Sender/Empfänger-Geräten, wobei ein erstes der Geräte dem Gerät nach Anspruch 9 entspricht, und mindestens ein zweites der Geräte einem der Ansprüche 10 bis 12 entspricht.

**Claims**

1. Method of implementing operations using a radiocommunication frame (CMF) in a system comprising at least three radio transmitter-receiver devices (1-5), said method comprising the following steps:

a- transmission of a first request radio signal (REQ1) to a first system device (2) by another system device (1);

b- transmission of at least one second request radio signal (REQ2-REQ4) by another system device (1, 3-5) to said first device (2);

c- transmission of a frame (CMF) by said first device (2) in response to said first request radio signal (REQ1); then

d- use of said frame (CMF) in said other system device (1) that sent said first request radio signal (REQ1),

**characterized in that** it also comprises the use of said frame (CMF) in said other system devices (1, 3-5) that sent a second request signal (REQ2-REQ4) in a predetermined time slot.

2. Method according to Claim 1, **characterized in that** it comprises, in response to said second request signal (REQ2-REQ4) transmitted in the predetermined time slot, no transmission of a frame (CMF) by said first device (2).

3. Method according to Claim 1 or 2, **characterized in that** the predetermined time slot comprises a first duration greater than a determined guard time ($T_G$) between the reception of said first request signal (REQ1) by said first device (2) and the transmission of the frame (CMF), and/or a second duration at least equal to a determined listening time ($T_{EC}$) after the transmission of the frame (CMF).

4. Method according to any one of the preceding claims, wherein the frame (CMF) is transmitted at an instant that is determined by a multiple-access controller.

5. Method according to any one of the preceding claims, wherein the frame (CMF) is a channel measurement frame.

6. Method according to any one of the preceding claims, wherein said first (REQ1) and second (REQ2-REQ4) request signals are transmitted by one and the same system device.

7. Method of measuring distances between a first device of a system and at least two other system devices, using a method of implementing operations using a radiocommunication frame according to any one of the preceding claims, **characterized in that** it comprises:

   a- in response to each detected request signal (REQ1-REQ4), a transmission of an acknowledgement signal (ACK1-ACK4) by said first device (2), intended for said other device (1, 3-5) that transmitted said request signal; and

   b- a measurement of a radio signal exchange time ($T_{EXCH}$) from an instant of transmission of each request signal (REQ1-REQ4) and an instant of reception of the acknowledgement signal transmitted in response to said request signal (ACK1-ACK4).

8. Method according to Claim 7 together with Claim 3, **characterized in that** it comprises a determination of the respective separation distance between said first device (2) and each of the other devices (1, 3-5) based on the exchange time ($T_{EXCH}$) and an analysis of the received radio signals corresponding to said frame (CMF).

9. Radio transmitter-receiver device (2) suitable for, in response to a first received request signal and in case of reception of at least one second request signal in a determined time slot, the two request signals having been transmitted by two other respective devices, transmitting a single frame intended to be used by the other two devices.

10. Radio transmitter-receiver device (3) suitable for, during a determined time slot following the reception of a first request signal (REQ1) by another device, transmitting a second request signal and using a frame transmitted by said other device in response to said first request signal.

11. Radio transmitter-receiver device (4) according to Claim 10, suitable for transmitting to said other device (2) the second request signal during a determined time slot between the reception of the first request signal (REQ1) and the transmission of said frame (CMF) by said other device.

12. Radio transmitter-receiver device (4) according to Claim 10, suitable for, on detecting said transmitted frame and before the expiry of a determined listening time of said other device, using said frame then transmitting the second request signal to said other device.

13. System comprising at least three radio transmitter-receiver devices, a first of said devices being compliant with the device according to Claim 9 and at least one second of said devices being compliant with one of Claims 10 to 12.

FIG.1.

FIG.2.

**EP 1 834 501 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1213939 A